# EUROPEAN PATENT SPECIFICATION

(11) **EP 4 221 847 B1**
(45) Date of publication and mention of the grant of the patent: **07.08.2024**
(21) Application number: 21807116.5
(22) Date of filing: 12.11.2021
(51) Int. Cl.: A41D 13/11, B01D 39/16, C02F 1/00, A62B 23/02, C02F 1/50, C02F 1/28

(54) **FILTER MATERIAL FOR FILTERING A FLUID**
FILTERMATERIAL ZUM FILTERN EINES FLUIDS
MATÉRIAU FILTRANT POUR FILTRER UN FLUIDE

(30) Priority: 16.11.2020 EP 20207837
(43) Date of publication of application: 09.08.2023
(73) Proprietor: Bio-Gate AG, 90411 Nürnberg (DE)
(72) Inventor: STEINRUECKE, Peter, 90461 Nuremberg (DE); KONRADT, Thomas, 90513 Zirndorf (DE)
(74) Representative: Dr. Gassner & Partner mbB
(86) International application number: PCT/EP2021/081562
(87) International publication number: WO 2022/101431

(56) References cited:
- KR-B1- 100 843 191
- US-A1- 2007 213 679
- US-A1- 2015 202 557
- US-A1- 2015 290 354

## Description

The invention concerns filter material for filtering a fluid which filter material comprises fibers and metallic silver particles.

US 8,067,663 B2 discloses an absorbent sanitary article for absorbing body fluids which comprises a fibrous matrix including at least one fiber having an outer surface and metallic silver attached to the outer surface, the silver having a metallic silver surface area. Attachment of the silver to the outer surface consists essentially of chemical and/or physical bonds other than bonds formed by liquid matrix or dispersing media for the silver, whereby the silver is immobilized relative to the fiber surface so that the metallic silver surface area is accessible to the body fluids and the silver cannot be flushed away from the fiber during use of the sanitary article. The silver may directly contact the outer surface to form the chemical and/or physical bonds such as bonds by electrical charges.

WO 2005/023213 A1 discloses a body care product, in which porous particles containing metallic silver are present. The particles are formed from metal and have a mean diameter of between 1 and 100 µm.

US 2007/0051366 A1 discloses a breathing mask comprising a surface made of a material matrix that contains silver particles of a size of 1 nm to 500 nm. The matrix material may be a polymer. The inventors of this invention found that improved protection of the breathing masks against contamination with bacteria, fungi and/or viruses can be achieved by the use of silver particles in the nanosize range of 1 nm to 500 nm compared to the use of stabilized silver ions. According to this document it is suspected that silver ions, which are responsible for the antimicrobial action, are formed on the surface of the silver particles. The document further discloses that the surface of the silver particles is too small to offer an effective antimicrobial protection if the silver particles are larger than 500 nm.

US 2015/202557 A1 discloses a method for producing a filter element including metal or metal oxide particles, e.g. micronized silver particles, adhered to fibers of the filter element.

The problem to be solved by the present invention is providing an alternative filter material which is easy to produce and provides antimicrobial and antiviral properties of silver. Furthermore, a method for producing such filter material and a use of the filter material shall be provided.

The problem is solved by the features of claims 1, 8 and 12. Embodiments of the invention are subject-matter of claims 2 to 7 and 9 to 11.

According to the invention a filter material for filtering a fluid is provided. The fluid may be in liquid or gaseous form. The fluid can be a liquid or a mixtures of liquids including a suspension or an emulsion. The fluid can also be a gas or a mixture of gases including an aerosol. An aerosol means a suspension of solid particles or liquid droplets in a gas or a mixture of gases. In an embodiment the mixture of gases is air. The filter material comprises fibers and metallic silver particles. The silver particles have a rough surface structure. They are fixed in the filter material by the rough surface structure being caught in the fibers. The rough surface structure can be any structure in which the fibers can entangle themselves. Such silver particles are available from the company Bio-Gate AG, Nuremberg, Germany under the trade name MicroSilver BG^{®} and are disclosed, e. g. in WO 2005/023213 A1. In these particles the rough surface structure is an open structure not comprising a plane area with elements protruding from this surface but consisting of a heavily jointed cragged structure.

The inventors of the present invention recognized that the surface of these silver particles has a rough structure and that such a structure catches in fibers of filter materials for fluids such that the silver particles are not flushed or blown away when the fluid passes the filter material. Owing to this structure the filter material can by permanently equipped with metallic silver particles. A binding agent is not required for fixing the silver particles to the fibers. In an embodiment of the invention no binding agent brings about a binding or supports a binding of the silver particles to the fibers, i. e. no binding agent for bringing about a binding or for supporting a binding of the silver particles to the fibers is present in the filter material.

The fibers in the filter material may be nonwoven or woven fibers. Nonwoven fibers provide more possibilities for the silver particles to catch in the fibers than fibers in woven fabric.

The metallic particles are open porous particles. The porous particles may have a sponge-like structure. The inventors have recognized that porous particles maintain their rough structure when becoming smaller by release of silver ions during use of the filter material. Owing to this effect, the silver particles remain caught in the fibers when the particles slowly get smaller during use of the filter material.

The pores in the particles have a size and form allowing the particles to be penetrated by the fibers or at least a part of the fibers or to be traversed by the fibers or at least a part of the fibers. Form and size of the pores cannot be given more precisely because they depend on the diameter and mechanical properties, in particular flexibility, of the fibers or at least a part of the fibers. When the particles can be penetrated or traversed only by a part of the fibers the reason for this can be the diameter of the fibers is not unitary or fibers made from different materials are present in the filter material.

The particles may have a mean internal porosity of at least 65%, in particular of between 65 and 95%. Internal porosity is understood as meaning the percentage of the volume of the particle which is not filled with metal. The mean internal porosity of the particles can be determined using the following method:
1. embedding the particles in a plastic,
2. preparing ultrathin sections of the embedded particles,
3. taking transmission electron microscopic (TEM) photographs of the particles,
4. determining the percentage of the area within each particle which is not filled with metal, in relation to the total area of this particle, in a plurality of TEM photographs, and
5. calculating the mean of a plurality of percentages which have been determined in this way.

In this connection, step 4 can be effected by means of a computer-assisted image analysis of the TEM photographs. In addition to the internal porosity, it is also possible to determine the total porosity of the particles. For this, the beating density of a powder of the particles is first of all determined. The beating density is the mass of a unit volume of a powder which is layered as densely as possible by means of beating. The beating density can be determined in accordance with DIN ISO 3953. The value which is determined in this connection is calculated as a percentage of the density of the metal forming the particles, in this case silver having a density of 10.49 g/cm³, and subtracted from 100%. The value which is calculated in this way constitutes the total porosity of the particles. In the case of the particles which are contained in the filter material according to the invention, it can be between 85 and 95%, in particular between 90 and 95%, in particular between 93 and 95%.

The particles may have a mean internal porosity of between 65 and 90%, in particular of between 70 and 85%, in particular of between 75 and 85% or of between 85 and 95%, in particular of between 90 and 95%. The choice of the porosity can be used to adapt the particles to the fibers such that at least a part of the fibers can penetrate or traverse the particles.

The particles may be present as agglomerates of metallic primary particles. The agglomerates can be formed from primary particles having a mean diameter of between 10 and 200 nm, in particular of between 15 and 80 nm. Primary particles of this size permit adequate release of silver ions and can be readily produced. The mean distance between the in each case outermost primary particles at the surface of the agglomerates is in particular in the range of from 20 to 200 nm, in particular of from 100 to 200 nm. The primary particles can be identified electron microscopically on the basis of their external shape and size.

The particles can be produced by thermally evaporating silver and then depositing the silver vapor on a metal filter. Thus, the particles are formed as agglomerates of primary particles connected to each other via sinter necks. The aggregates are highly porous. The particles can be taken up in a carrier material such as a silicone oil, a mineral oil or glycerol. Such particles are disclosed in WO 2005/023213 A1.

The metallic silver particles may have an equivalent spherical diameter in the range of 1 to 100 µm, in particular in the range of 5 to 50 µm. The equivalent spherical diameter may be determined by sieving or aerodynamically, hydrodynamically or optically, in particular by optical scattering. The metallic silver particles may comprise or consist of silver particles having an equivalent spherical diameter in the range of 1 to 100 µm, in particular in the range of 5 to 50 µm. Particles having an equivalent spherical diameter of 5 µm or more usually do not penetrate the lung but only the throat when inhaled. Therefore, security of filter material according to the invention which filter material is intended for filtering air to be inhaled is increased in the case of accidental release of silver particles from the filter material, if the filter material only contains silver particles having an equivalent spherical diameter of 5 µm or more.

The particles may consist of at least 99% w/w (percent by weight), in particular 99.9% w/w, metallic silver. At such a high silver content, there is no noticeable cytotoxic effect due to other metal ions, in particular copper ions.

It is also claimed a breathing mask, a respirator mask, an air-cleaning device, an airconditioning device or a liquid cleaning device comprising the filter material of the invention.

The filter material may be the filter material of a breathing mask or a respirator mask. The breathing mask may be a mask protecting others from being infected by the wearer of the mask. The respirator mask may be a mask protecting the wearer of the mask from inhaling harmful dusts, fumes, vapors or gases. The filter material may also be the filter material of an air-cleaning device, an airconditioning device or a liquid cleaning device such as a liquid cleaning device for preparing drinking water.

The fibers of the filter material can be synthetic fibers comprising or consisting of a polymer selected from the group consisting of polyamides, polyacrylics, elastanes, polychlorides, polyesters, polyphenylene sulfide (PPS), polysulfone (PSU), polyphenylene sulfone (PPSU), cycloolefin copolymers (COC), silicones and polyoxyalkylenes. The synthetic fibers may comprise or consist of a polyester which is polyethylene terephthalate (PET), a polyoxyalkylene which is polyoxymethylene (POM), or a polyamide which is polyamide-12 (PA-12) or polyamide-6. The fibers may have a diameter in the range of 100 nm to 10 µm, in particular 300 nm to 5 µm, in particular 500 nm to 3 µm. The inventors found that the smaller the diameter of the fibers in the given range is the more effective is the catching of the particles in the fibers.

The invention further concerns a method for producing the filter material according to the invention, wherein a liquid or gaseous dispersion or a powder of the metallic silver particles is applied to a fiber comprising material for filtering a fluid. Those of the metallic silver particles which are not able to fix themselves in the fiber comprising material are removed from the fiber comprising material. Removal of the nonfixed particles is required because otherwise these particles would contaminate the fluid to be filtered by the filter material.

The liquid dispersion may be applied to the fiber comprising material by application of the liquid dispersion as an aerosol onto the fiber comprising material, e. g. by spraying, or by dipping of the fiber comprising material into the liquid dispersion.

The gaseous dispersion may be applied to the fiber comprising material by blowing the gaseous dispersion onto and/or through the fiber comprising material. In an embodiment of the invention the application of the silver particles to the fiber comprising material is followed by kneading and/or shaking of the fiber comprising material and/or application of vibrations and/or sound to the fiber comprising material. The sound may be ultrasonic sound or infrasound. Ultrasonic sound means sound having a frequency of 20 kHz or more and infrasound means lowfrequency sound, i.e., sound having sound waves with a frequency below 20 Hz. By kneading and/or shaking and/or application of vibrations and/or sound it is achieved that the silver particles are spread in the fiber comprising material. Furthermore, catching of the silver particles in the fibers is supported and facilitated by kneading and/or shaking of the fiber comprising material and/or application of vibrations and/or sound to the fiber comprising material.

Removing of the metallic silver particles from the fiber comprising material may be achieved by passing liquid or gaseous fluid through the fiber comprising material. Thus nonfixed particles are flushed or blown away. Whether a particle is considered as fixed or nonfixed may depend on the intended use of the filter material. Particles that are not flushed or blown away during the intended use of the filter material may be considered fixed. Alternatively, removing of the metallic silver particles from the fiber comprising material may be achieved by patting nonfixed silver particles off the fiber comprising material.

The invention further concerns a use of the filter material according to the invention for filtering a fluid.

All features given in this description including the embodiment are to be understood as features that can be applied to all forms of the invention within the scope of the claims. This means, e. g., that features given for the filter material can also be applied to the method and/or the use according to the invention and vice versa.

In the following, embodiments of the invention are illustrated:
For all embodiments respirator masks RM 100 FFP2/KN 95 were used. The masks were purchased from Medisana GmbH, Neuss, Germany. The masks comprise three layers of different nonwovens.

### Example 1

Metallic silver particles were provides in the form of MicroSilver BG^{®} which was purchased as a powder from Bio-Gate AG, Nuremberg, Germany. 10 g of the powder were applied to the surface of the inner nonwoven layer of the respirator mask, i. e., the layer intended to be facing the face of the wearer of the mask. The powder was distributed equally on this surface. Subsequently the mask was kneaded by hand for five minutes. During this kneading of the mask the silver particles were spread and caught at least in the inner nonwoven layer of the mask.

For removing nonfixed particles from the nonwoven layer(s) of the mask and demonstrating that the remaining particles are effectively fixed to the fibers of the nonwoven an aspirating port of a vacuum cleaner was impressed directly on a site of the surface of the inner nonwoven layer of the mask where the silver particles have been applied, distributed and kneaded into the mask. Suction by the vacuum cleaner was performed for 2 minutes. After this procedure silver particles could be seen by use of a light microscope in the inner nonwoven layer at the site where the aspirating port of the vacuum cleaner was impressed. This shows that the silver particles are sufficiently fixed in the nonwoven part of the mask such that they are not blown away during ordinary use of the respirator mask.

### Example 2

Metallic silver particles were provided in the form of MicroSilver BG^{®} which was purchased as a powder from Bio-Gate AG, Nuremberg, Germany. The metallic silver particles were dispersed in a concentration of 0.1 % w/w in a mixture comprising glycerol, propylene glycol, sclerotium gum and water. The resulting dispersion was sprayed on masks as follows:
Three times each 300 µL of the dispersion were either a) sprayed on the surface of the inner nonwoven layer of the mask, i.e., the layer intended to be facing the face of the wearer of the mask, or b) sprayed on both the inner nonwoven layer of the mask and the outer nonwoven layer of the mask. No further mechanical treatment of the masks occurred. The size of groups a) and b) was each n=3.

Subsequently, each of the masks was fixed and tested on a Sheffield testing-head according to DIN EN 149, which norm concerns testing of respiratory protective devices. The Sheffield testing-head has the form of a human head with an air suction opening in the area where usually the mouth is located. The masks were fixed on the head corresponding to the usual wearing of the mask and air was sucked through the mask and the opening into an extraction duct. The drawing-off air was filtered by means of a 0.45 µm cellulose filter in the extraction duct. Air was drawnoff at 90 L/min for 60 minutes. Thus, the total gas volume sucked through the mask was 5400 L. Since the respiratory minute volume of an adult at rest is about 6 L to 10.5 L per minute, these test conditions correspond to 8.6 hours to 15 hours of continuous use of the mask. After the suction was completed, the cellulose filters were analyzed for total silver content by inductively coupled plasma mass spectrometry (ICP-MS). The results are shown in Table 1.

**Table 1**

| | Group a) MicroSilver BG^{®} application on inner nonwoven layer | Group b) MicroSilver BG^{®} application on inner and outer nonwoven layer |
|---|---|---|
| **Mask** | | |
| Spray application volume | 3 x 300 µL (0.1 % w/w MicroSilver BG^{®}) | each 3 x 300 µL (0.1 % w/w MicroSilver BG^{®}) |
| Total mass of MicroSilver BG^{®} on mask | 0.9 mg | 1.8 mg |
| | | |

| **Total mass of MicroSilver BG^{®} on cellulose filter** | | |
|---|---|---|
| Sample 1 | 0 µg | 0 µg |
| Sample 2 | 0.06 µg | 0.27 µg |
| Sample 3 | 0 µg | 0.01 µg |
| | | |

| **% of MicroSilver BG^{®} remaining on mask** | | |
|---|---|---|
| Sample 1 | 100 % | 100 % |
| Sample 2 | 99.993 % | 99.985 % |
| Sample 3 | 100 % | 99.994 % |

Table 1 shows that in both groups a) and b), the metallic silver particles were almost completely retained in or on the masks and do not detach from the masks. Furthermore, Table 1 shows that even with double dosing of the metallic silver particles, no significant increase of detached metallic silver particles can be observed. This shows that the metallic silver particles are sufficiently fixed in the masks such that are not detached during ordinary use of the masks. The results further show that kneading and/or shaking of the fiber comprising material and/or application of vibrations and/or sound to the fiber comprising material is not required for catching of the silver particles in the fibers.

## Claims

1. Filter material for filtering a fluid which filter material comprises fibers and metallic silver particles, wherein said silver particles are fixed in the filter material by having a rough surface structure caught in said fibers, wherein said metallic silver particles are open porous particles, wherein pores in said particles have a size and form allowing said particles to be penetrated by said fibers or at least a part of said fibers or to be traversed by said fibers or at least a part of said fibers.

2. Filter material according to claim 1, wherein said fibers are nonwoven fibers.

3. Filter material according to claim 1 or 2, wherein said metallic silver particles have an equivalent spherical diameter in the range of 1 to 100 µm.

4. A breathing mask, a respirator mask, an air-cleaning device, an airconditioning device or a liquid cleaning device comprising a filter material according to any of the preceding claims.

5. Filter material according to any of the preceding claims, wherein said fibers are synthetic fibers comprising or consisting of a polymer selected from the group consisting of polyamides, polyacrylics, elastanes, polychlorides, polyesters, polyphenylene sulfide (PPS), polysulfone (PSU), polyphenylene sulfone (PPSU), cycloolefin copolymers (COC), silicones and polyoxyalkylenes.

6. Filter material according to claim 5, wherein the synthetic fibers comprise or consist of a polyester which is polyethylene terephthalate (PET), a polyoxyalkylene which is polyoxymethylene (POM), or a polyamide which is polyamide-12 (PA-12) or polyamide-6.

7. Filter material according to any of the preceding claims, wherein said fibers have a diameter in the range of 100 nm to 10 µm, in particular 500 nm to 5 µm.

8. Method for producing the filter material according to any of the preceding claims, wherein a liquid or gaseous dispersion or a powder of said metallic silver particles is applied to a fiber comprising material for filtering a fluid and those of the metallic silver particles which are not able to fix themselves in said fiber comprising material are removed from said fiber comprising material.

9. Method according to claim 8, wherein said liquid dispersion is applied to said fiber comprising material by application of said liquid dispersion as an aerosol onto said fiber comprising material or by dipping of said fiber comprising material into said liquid dispersion and wherein said gaseous dispersion is applied to said fiber comprising material by blowing said gaseous dispersion onto and/or through said fiber comprising material.

10. Method according to claim 8 or 9, wherein application of said silver particles to said fiber comprising material is followed by kneading and/or shaking of the fiber comprising material and/or application of vibrations and/or sound to the fiber comprising material.

11. Method according to any of claims 8 to 10, wherein removing of said metallic silver particles from said fiber comprising material is achieved by passing liquid or gaseous fluid through the fiber comprising material or by patting off nonfixed silver particles from the fiber comprising material.

12. Use of the filter material according to any of claims 1 to 7 for filtering a fluid.

## Patentansprüche

1. Filtermaterial zum Filtern eines Fluids, wobei das Filtermaterial Fasern und metallische Silberpartikel umfasst, wobei die Silberpartikel in dem Filtermaterial fixiert sind, indem sie eine raue Oberflächenstruktur aufweisen, die in den Fasern verfangen ist, wobei die metallischen Silberpartikel offenporige Partikel sind, wobei Poren in den Partikeln eine Größe und Form aufweisen, die es den Partikeln erlaubt, von den Fasern oder zumindest einem Teil der Fasern durchdrungen zu werden oder von den Fasern oder zumindest einem Teil der Fasern durchquert zu werden.

2. Filtermaterial nach Anspruch 1, wobei die Fasern Vliesfasern sind.

3. Filtermaterial nach Anspruch 1 oder 2, wobei die metallischen Silberpartikel einen äquivalenten sphärischen Durchmesser im Bereich von 1 bis 100 µm aufweisen.

4. Atemmaske, Atemschutzmaske, Luftreinigungsgerät, Klimagerät oder Flüssigkeitsreinigungsgerät, umfassend ein Filtermaterial nach einem der vorhergehenden Ansprüche.

5. Filtermaterial nach einem der vorhergehenden Ansprüche, wobei die Fasern synthetische Fasern sind, die ein Polymer umfassen oder aus einem Polymer bestehen, das aus der Gruppe ausgewählt ist, die aus Polyamiden, Polyacrylen, Elastanen, Polychloriden, Polyestern, Polyphenylensulfid (PPS), Polysulfon (PSU), Polyphenylensulfon (PPSU), Cycloolefin-Copolymeren (COC), Silikonen und Polyoxyalkylenen besteht.

6. Filtermaterial nach Anspruch 5, wobei die synthetischen Fasern einen Polyester, bei dem es sich um Polyethylenterephthalat (PET) handelt, ein Polyoxyalkylen, bei dem es sich um Polyoxymethylen (POM) handelt, oder ein Polyamid, bei dem es sich um Polyamid-12 (PA-12) oder Polyamid-6 handelt, umfassen oder daraus bestehen.

7. Filtermaterial nach einem der vorhergehenden Ansprüche, wobei die Fasern einen Durchmesser im Bereich von 100 nm bis 10 µm, insbesondere 500 nm bis 5 µm, aufweisen.

8. Verfahren zur Herstellung des Filtermaterials nach einem der vorhergehenden Ansprüche, wobei eine flüssige oder gasförmige Dispersion oder ein Pulver der metallischen Silberpartikel auf ein faserhaltiges Material zur Filtration eines Fluids aufgebracht wird und diejenigen der metallischen Silberpartikel, die sich nicht in dem faserhaltigen Material fixieren können, aus dem faserhaltigen Material entfernt werden.

9. Verfahren nach Anspruch 8, wobei die flüssige Dispersion auf das faserhaltige Material aufgebracht wird, indem die flüssige Dispersion als Aerosol auf das faserhaltige Material aufgebracht wird oder indem das faserhaltige Material in die flüssige Dispersion eingetaucht wird, und wobei die gasförmige Dispersion auf das faserhaltige Material aufgebracht wird, indem die gasförmige Dispersion auf und/oder durch das faserhaltige Material geblasen wird.

10. Verfahren nach Anspruch 8 oder 9, wobei auf das Aufbringen der Silberpartikel auf das faserhaltige Material ein Kneten und/oder Schütteln des faserhaltigen Materials und/oder die Anwendung von Vibrationen und/oder Schall auf das faserhaltige Material folgt.

11. Verfahren nach einem der Ansprüche 8 bis 10, wobei das Entfernen der metallischen Silberpartikel aus dem faserhaltigen Material durch Hindurchleiten eines flüssigen oder gasförmigen Fluids durch das faserhaltige Material oder durch Abklopfen nicht fixierter Silberpartikel von dem faserhaltigen Material erreicht wird.

12. Verwendung des Filtermaterials nach einem der Ansprüche 1 bis 7 zur Filtration eines Fluids.

## Revendications

1. Matériau de filtre pour filtrer un fluide, lequel matériau de filtre comprend des fibres et particules d'argent métalliques, dans lequel lesdites particules d'argent sont fixées dans le matériau de filtre en ayant une structure de surface rugueuse prise dans lesdites fibres, dans lequel lesdites particules d'argent métalliques sont des particules poreuses ouvertes, dans lequel des pores dans lesdites particules ont une taille et forme permettant auxdites particules d'être pénétrées par lesdites fibres ou au moins une partie desdites fibres ou d'être traversées par lesdites fibres ou au moins une partie desdites fibres.

2. Matériau de filtre selon la revendication 1, dans lequel lesdites fibres sont des fibres non tissées.

3. Matériau de filtre selon la revendication 1 ou 2, dans lequel lesdites particules d'argent métalliques ont un diamètre sphérique équivalent dans la plage de 1 à 100 µm.

4. Masque filtrant, masque de respirateur, épurateur d'air, dispositif de climatisation ou épurateur de liquide comprenant un matériau de filtre selon l'une quelconque des revendications précédentes.

5. Matériau de filtre selon l'une quelconque des revendications précédentes, dans lequel lesdites fibres sont des fibres synthétiques comprenant ou constituées d'un polymère sélectionné parmi le groupe constitué de polyamides, polyacryliques, élasthannes, polychlorures, polyesters, sulfure de polyphénylène (PPS), polysulfone (PSU), polyphénylènesulfone (PPSU), copolymères de cyclooléfine (COC), silicones et polyoxyalkylènes.

6. Matériau de filtre selon la revendication 5, dans lequel les fibres synthétiques comprennent ou sont constituées d'un polyester qui est le polyéthylène téréphtalate (PET), d'un polyoxyalkylène qui est le polyoxyméthylène (POM) ou d'un polyamide qui est le polyamide-12 (PA-12) ou polyamide-6.

7. Matériau de filtre selon l'une quelconque des revendications précédentes, dans lequel lesdites fibres ont un diamètre dans la plage de 100 nm à 10 µm, notamment 500 nm à 5 µm.

8. Procédé de production du matériau de filtre selon l'une quelconque des revendications précédentes, dans lequel une dispersion liquide ou gazeuse ou une poudre desdites particules d'argent métalliques est appliquée à un matériau comprenant des fibres pour filtrer un fluide et les particules d'argent métalliques qui ne sont pas capables de se fixer dans ledite matériau comprenant des fibres sont éliminées dudite matériau comprenant des fibres.

9. Procédé selon la revendication 8, dans lequel ladite dispersion liquide est appliquée à ledite matériau comprenant des fibres par application de ladite dispersion liquide en tant qu'aérosol sur ledite matériau comprenant des fibres ou par trempage dudite matériau comprenant des fibres dans ladite dispersion liquide, et dans lequel ladite dispersion gazeuse est appliquée à ledite matériau comprenant des fibres par soufflage de ladite dispersion gazeuse sur et/ou à travers ledite matériau comprenant des fibres.

10. Procédé selon la revendication 8 ou 9, dans lequel l'application desdites particules d'argent à ledite matériau comprenant des fibres est suivie du pétrissage et/ou secouage du matériau comprenant des fibres et/ou de l'application de vibrations et/ou de son à le matériau comprenant des fibres.

11. Procédé selon l'une quelconque des revendications 8 à 10, dans lequel l'élimination desdites particules d'argent métalliques dudite matériau comprenant des fibres est obtenue en faisant passer du fluide liquide ou gazeux à travers le matériau comprenant des fibres ou en tapotant les particules d'argent non fixées du matériau comprenant des fibres.

12. Utilisation du matériau de filtre selon l'une quelconque des revendications 1 à 7 pour filtrer un fluide.
